# EUROPEAN PATENT SPECIFICATION

(11) **EP 2 093 371 B1**
(45) Date of publication and mention of the grant of the patent: **28.06.2017**
(21) Application number: 09002385.4
(22) Date of filing: 20.02.2009
(51) Int. Cl.: E06B 3/70, B60J 5/04

(54) **Vehicle door with profile adjustment mechanism and related method**
Fahrzeugtür mit Profiljustierungsmechanismus und zugehöriges Verfahren
Portière de véhicule avec mécanismes d'ajustement du profil et procédé associé

(30) Priority: 22.02.2008 US 30773; 16.02.2009 US 152855
(43) Date of publication of application: 26.08.2009
(73) Proprietor: Thetford BV, 4870 AD Etten-Leur (NL)
(72) Inventor: Van Eil, Louis, 4870 Etten-Leur (NL)
(74) Representative: Grosse, Rainer

(56) References cited:
- JP-A- 9 279 952
- US-A- 5 046 778

## Description

### INTRODUCTION

The present teachings generally relate to a vehicle door. More particularly, the present teachings relate to a vehicle door with a profile adjusting mechanism. Additionally, the present teachings relate to a method of adjusting the profile of a vehicle door.

### BACKGROUND

Caravans and the like include entrance and other doors for providing access. It is desirable that the doors properly fit with the vehicle. In certain applications, it may be desirable to conform a door with a curved vehicle surface.US 5046778 discloses a vehicle door having a door blade. Said vehicle door comprises a mechanism for curving a pillar member including a tension member extending generally parallel to and spaced from a surface of the door blade.

### SUMMARY

According to one aspect, the present teachings provide a vehicle door with a profile adjustment mechanism according to claim 1.

According to another aspect, the present teachings provide a method of adjusting the profile of the vehicle door of claim 1. The method includes providing an elongated tension member. The method additionally includes coupling a first end of the tension member proximate a first end of the vehicle door and coupling a second end of the tension member proximate a second end of the vehicle door. The method further includes increasing the tension of the tension member to adjust the profile of the vehicle door.

Further areas of applicability of the present teachings will become apparent from the detailed description provided hereinafter. It should be understood that the detailed description and specific examples, while indicating exemplary embodiments of the invention, are intended for purposes of illustration only and are not intended to limit the scope of the invention.

### BRIEF DESCRIPTION OF THE DRAWINGS

The present teachings will become more fully understood from the detailed description and the accompanying drawings, wherein:
Figure 1 is an environmental view of an exemplary vehicle including a vehicle odor constructed in accordance with the present teachings.
Figure 2 is a perspective view of a vehicle door constructed in accordance with the present teachings to include a mechanism for adjusting a profile of the vehicle door, an inner panel of the door shown removed for purposes of illustration.
Figure 3 is enlarged perspective view of a portion of the vehicle door of Figure 2, the inner panel of the door shown removed for purposes of illustration.
Figure 4 is another enlarged perspective view of a portion of the vehicle door of Figure 2, the inner panel of the door shown removed for purposes of illustration.
Figure 5 is another enlarged perspective view of a portion of the vehicle door of Figure 2, inner panel of the door cut-away for purposes of illustration.
Figure 6 is another enlarged perspective view of a portion of the vehicle door of Figure 2, inner panel of the door shown cut-away for purposes of illustration.
Figure 7 is a side view of a portion of the vehicle door of Figure 2, inner panel of the door shown removed for purposes of illustration.

### DESCRIPTION OF VARIOUS ASPECTS

The following description of various aspects of the present teachings is merely exemplary in nature and is in no way intended to limit the invention, its application or uses.

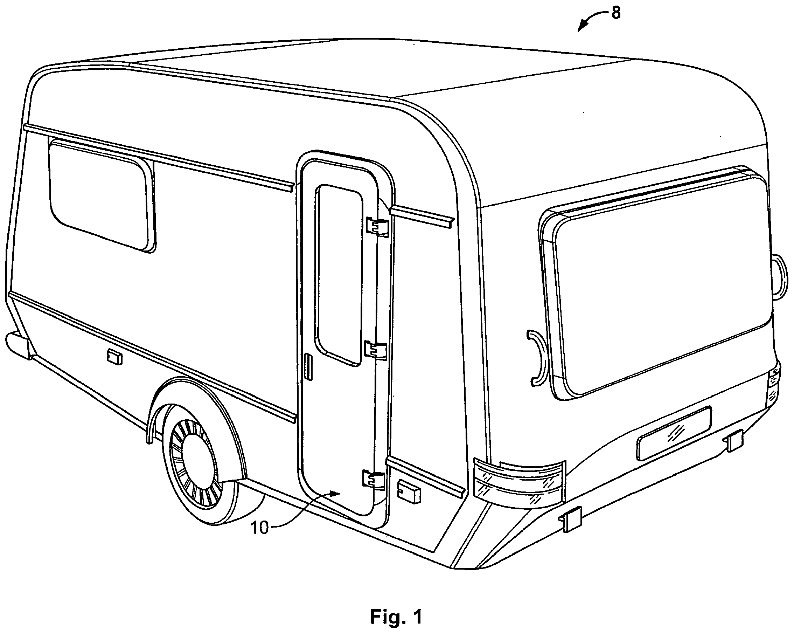

With initial reference to the environmental view of Figure 1 of the drawings, an exemplary vehicle 8 is illustrated to include a vehicle door 10 constructed according to the teachings of the present disclosure. As will be discussed in detail below, the vehicle door 10 will be understood to include a mechanism 12 for adjusting a profile of the vehicle door 10. It will be understood that the particular vehicle door 10 shown in the drawings is merely exemplary. The particular door illustrated is an entrance door 10 for a caravan. It will be understood, however, that the present teachings may be used with various other vehicle doors. Additionally, the present teachings may have application for other related uses.

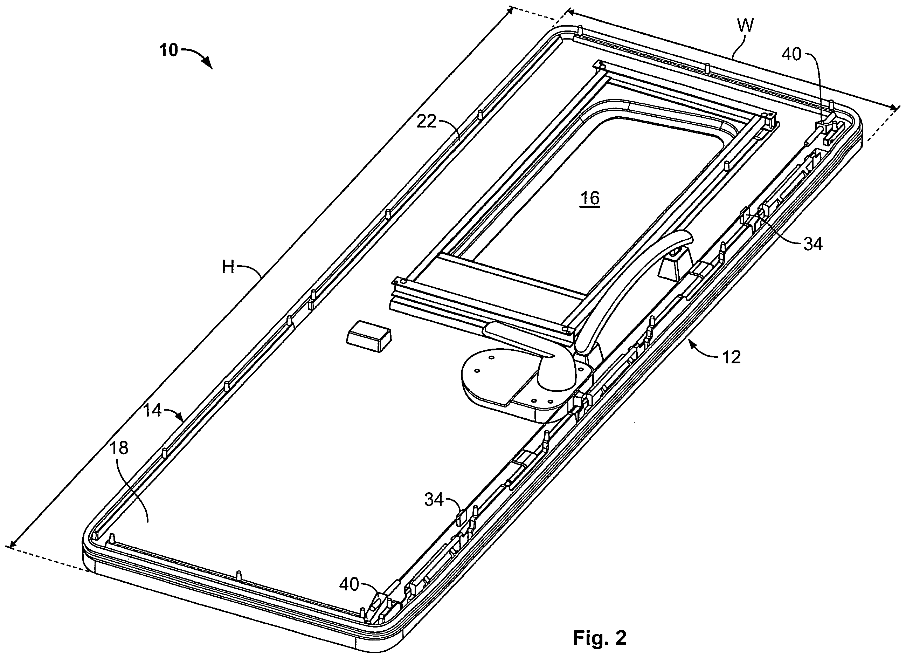

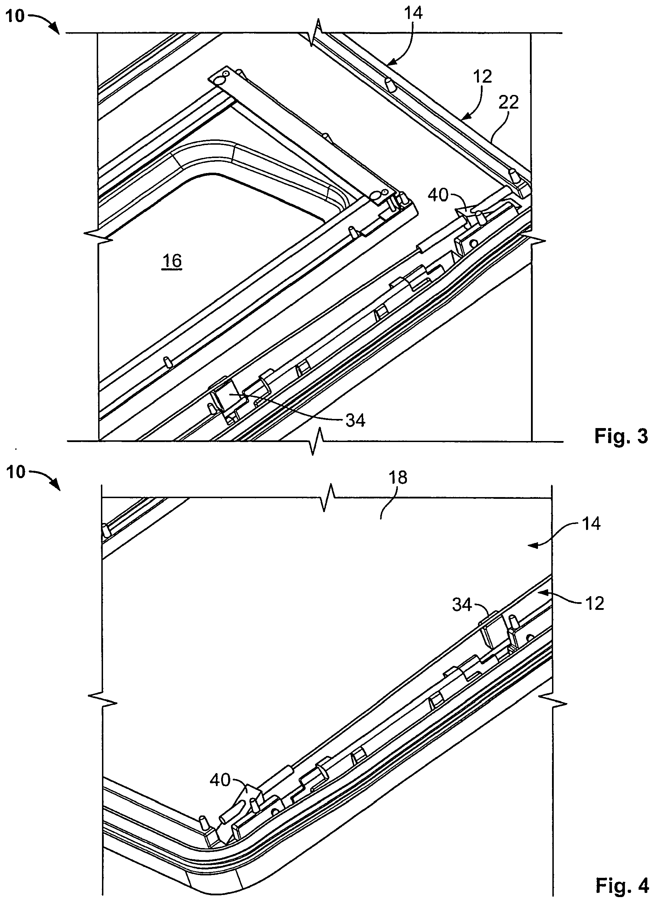

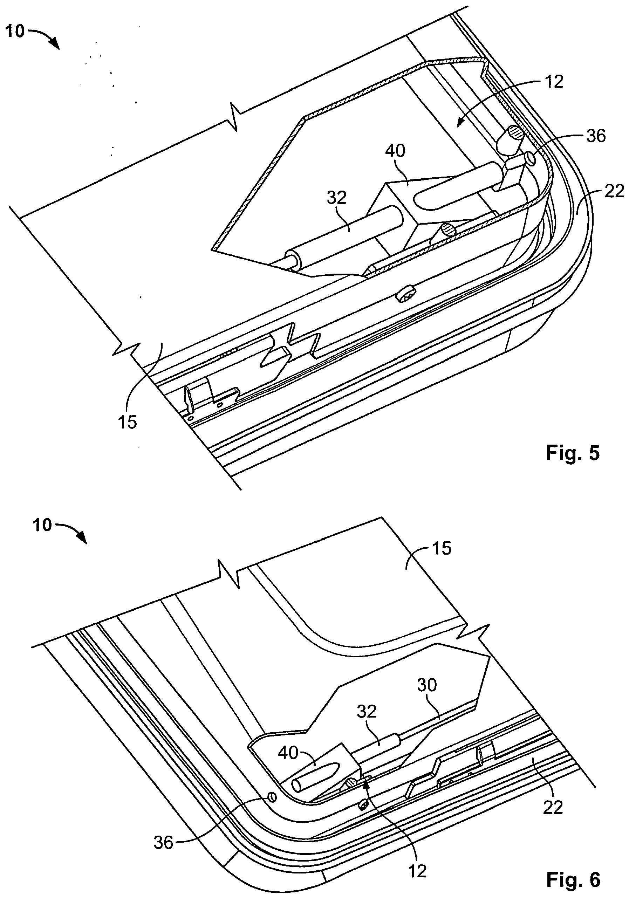

With continued reference to Figure 1 and additional reference to Figures 2-7, the vehicle door 10 of the present disclosure will be further described. Prior to addressing the details of the mechanism 12 for adjusting a profile of the vehicle door 10, a brief understanding of the construction of the exemplary vehicle door 10 is warranted. The vehicle door 10 may generally include a door blade 14 and an inner panel 15.

The vehicle door 10 may be generally rectangular in shape and may have a height H and a width W. In one particular application the vehicle door 10 may have a height H greater than a width W. The present teachings will be understood to have application for other shapes and relative dimensions. The door blade 14 may conventionally define a window opening 16. Further in a conventional manner, the door blade 14 may carry a door handle and latching arrangement.

The door blade 14 generally includes an inner surface 18 and an outer surface 20. A seal 22 may peripherally extend around the vehicle door 10 proximate the inner surface 18. The seal 22 may cooperate with the vehicle 8 in a conventional manner.

The door blade 14 is injection molded from plastic. Injection molding provides a relatively inexpensive and reliable method of manufacture. Injection molding also provides a vehicle door 10 that is sufficiently flexible to be adjusted in profile when under tension. For various reasons, the fit between the vehicle door 10 and the vehicle 8 may otherwise not be ideal. For example, the tolerances of the injection molding process may not be sufficient or the profile of the door 10 may otherwise not suitably cooperate with the vehicle 8. For this reason, the vehicle door 10 incorporates the mechanism 12 for adjusting a profile of the door 10.

The mechanism 12 may generally include an elongated tension member 30, a pair of tension devices 32 and a pair of support members 34. The elongated tension member 30 may comprise a rope, cable or similar structure that extends generally parallel to the surface of the vehicle door 10 which defines a profile to be adjusted.

In the particular embodiment illustrated, the tension member 30 extends substantially along the entire height H of the vehicle door 10 along one side and is operative to adjust the profile of the door in a vertical direction. In certain applications, a second mechanism (not shown) may be incorporated on the opposite side. In other applications, the present teachings may be adapted to alternatively adjust the profile of the door in a horizontal direction.

The mechanism 12 may include a tension device or a pair of tension adjustment devices 32 for adjusting the tension of the tension member 30 and resultantly adjusting the profile of the vehicle door 10. As illustrated, the tension devices 32 may be coupled to opposite ends of the tension member 30. As will become apparent below, the tension devices 32 may be accessed through holes 36 in the vehicle door 10 that may receive a screwdriver or similar tool.

The tension member 30 may be coupled to the blade 14 of the vehicle door 10 with a pair of mounting members 40. The mounting members 40 may be carried by the blade 14 proximate the ends of the tension member 30. As illustrated, the mounting members 40 may define openings for receiving respective ones of the tension devices 32.

The tension adjustment device 32 may cooperate with the associate mounting member 40 for adjusting the tension in the tension member 30. For example, the tension adjustment device 32 and the mounting member 40 may be threadably interconnected. An end of the device 32 may be configured to be engaged with a screwdriver or similar tool to rotate the device 32 relative to the mounting member 40. In this manner, rotation of the device 32 in a first direction (*e.g.,* clockwise) may serve to increase the tension in the tension member 30. Conversely, rotation of the device 32 in a second direction (*e.g.,* counterclockwise) may serve to decrease the tension in the tension member 30. The tension adjustment device 12 may alternatively comprise any other type of arrangement for adjusting the tension of the tension member 30.

The support members 34 may be carried by the door blade 10 and may serve to support the tension member 30. As illustrated, the support members may be positioned along the length of the tension member 30. It will be appreciated that a greater or lesser number of support members 34 may be incorporated.

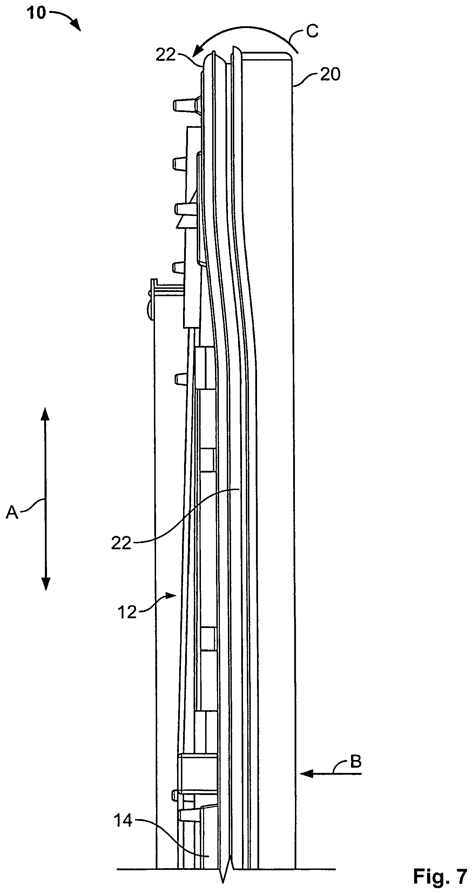

With particular reference to Figure 7, the forces on the door blade 14 when the tensioning device 12 is employed are illustrated. Again, in the embodiment illustrated the outer surface of the vehicle door 10 defines the profile of the door 10 to be adjusted. Upon tightening of the tension member 30, a rope tension is applied along the length of the tension member 30 in the directions of double arrow A. A support hinge force is applied in the direction of arrow B. Resultant movement of the door blade 10 is illustrated at arrow C.

In use, the door 10 constructed in accordance with the present teachings may be conventionally mounted to the vehicle 8. The profile of the door 10 may be adjusted to improve the fit of the door relative to the vehicle 8 by increasing or decreasing the tension in the tension member 30. Such adjustments may be made upon initial mounting of the door 10 to the vehicle or at a later time when adjustments are required.

The description of the present teachings is merely exemplary in nature and, thus, variations that do not depart from the scope of the appended claims are intended to be within the scope of the invention. Furthermore, the present invention has been described with reference to a particular embodiment having various features. One skilled in the art will recognize that these features may be used singularly or in any combination based on the requirements and specifications of a given application or design without departing from the scope of the appended claims.

## Claims

1. A vehicle door (10) having a door blade (14), the vehicle door (10) **characterized by:**
the door blade being injection molded from plastic; a mechanism (12) for adjusting a profile of the door blade, the mechanism (12) including:
a tension member (30) extending generally parallel to and
spaced from a surface of the door blade (14) having the profile for adjustment;
a first mounting arrangement (40) for coupling a first end of the tension member (30) to the door blade (14);
a second mounting arrangement (40) for coupling a second end of the tension member (30) to the door blade (14); and
at least one tension adjustment member (32) for adjusting a tension of the tension member (30) to correspondingly adjust the profile of the door blade (14);
whereby adjustment of the profile of the door blade (14) may be made upon initial mounting of the door to the vehicle or at a later time when adjustments are required.

2. The vehicle door of claim 1, wherein the tension member (30) extends substantially along a height of the vehicle door (10).

3. The vehicle door of claim 2, wherein the vehicle door (10) is an entrance door.

4. The vehicle door of claim 1, further comprising a seal (22) extending about a perimeter of the vehicle door (10).

5. The vehicle door of claim 1, wherein the tension member (30) is a rope.

6. The vehicle door of claim 1, wherein the tension member (30) is a cable.

7. The vehicle door of claim 1, wherein the adjustment mechanism (32) may be accessed through a hole (36) in the door (10).

8. The vehicle door of claim 1, wherein the profile is a curved profile.

9. The vehicle door of claim 1, wherein the adjustment element (32) is rotatable to increase the tension of the tension member (30).

10. A method of adjusting the profile of the vehicle door (10) of claim 1, the method comprising increasing the tension of the tension member (30) to adjust the profile of the vehicle door (10).

## Patentansprüche

1. Fahrzeugtür (10) mit einem Türblatt (14), wobei die Fahrzeugtür (10) **dadurch gekennzeichnet ist, dass**:
das Türblatt aus Kunststoff spritzgegossen ist;
und dass sie einen Mechanismus (12) zur Einstellung eines Profils des Türblatts aufweist, wobei der Mechanismus (12) umfasst:
ein Spannelement (30), das sich allgemein parallel zu und in einem Abstand von einer Oberfläche des Türblatts (14) erstreckt, die das Profil zur Einstellung aufweist;
eine erste Befestigungsanordnung (40) zur Kopplung eines ersten Endes des Spannelements (30) mit dem Türblatt (14);
eine zweite Befestigungsanordnung (40) zur Kopplung eines zweiten Endes des Spannelements (30) mit dem Türblatt (14); und
zumindest ein Spannungseinstellelement (32) zur Einstellung einer Spannung des Spannelements (30), um das Profil des Türblatts (14) entsprechend einzustellen;
wobei das Einstellen des Profils des Türblatts (14) bei der Erstmontage der Tür an dem Fahrzeug oder zu einem späteren Zeitpunkt, wenn Einstellungen erforderlich sind, erfolgen kann.

2. Fahrzeugtür nach Anspruch 1, wobei das Spannelement (30) sich im Wesentlichen entlang einer Höhe der Fahrzeugtür (10) erstreckt.

3. Fahrzeugtür nach Anspruch 2, wobei die Fahrzeugtür (10) eine Einstiegstür ist.

4. Fahrzeugtür nach Anspruch 1, des Weiteren umfassend eine Dichtung (22), die sich um einen Umfang der Fahrzeugtür (10) erstreckt.

5. Fahrzeugtür nach Anspruch 1, wobei das Spannelement (30) ein Seil ist.

6. Fahrzeugtür nach Anspruch 1, wobei das Spannelement (30) ein Kabel ist.

7. Fahrzeugtür nach Anspruch 1, wobei der Einstellmechanismus (32) durch ein Loch (36) in der Tür (10) zugänglich ist.

8. Fahrzeugtür nach Anspruch 1, wobei das Profil ein gekrümmtes Profil ist.

9. Fahrzeugtür nach Anspruch 1, wobei das Einstellelement (32) drehbar ist, um die Spannung des Spannelements (30) zu erhöhen.

10. Verfahren zum Einstellen des Profils der Fahrzeugtür (10) nach Anspruch 1, wobei das Verfahren das Erhöhen der Spannung des Spannelements (30) zum Einstellen des Profils der Fahrzeugtür (10) umfasst.

## Revendications

1. Porte de voiture (10) ayant un vantail de porte (14), la porte de voiture (10) étant **caractérisée par :**
le vantail de porte étant moulé en matière plastique par injection ;
un mécanisme (12) pour régler un profilé du vantail de porte, le mécanisme (12) comprenant :
un élément de tension (30) s'étendant généralement en parallèle avec et espacée d'une surface du vantail de porte (14) ayant le profilé à régler ;
un premier ensemble de montage (40) pour coupler une première extrémité de l'élément de tension (30) au vantail de porte (14) ;
un second ensemble de montage (40) pour coupler une seconde extrémité de l'élément de tension (30) au vantail de porte (14) ; et
au moins un élément de réglage de tension (32) pour régler une tension de l'élément de tension (30) afin de régler le profilé du vantail de porte (14) de manière correspondant ;
le réglage du profilé du vantail de porte (14) pouvant s'effectuer pendant le montage initial de la porte sur la voiture, ou à une occasion ultérieure, quand un réglage est requis.

2. Porte de voiture selon la revendication 1, dans laquelle l'élément de tension (30) s'étend sensiblement le long d'une hauteur de la porte de voiture (10).

3. Porte de voiture selon la revendication 2, dans laquelle la porte de voiture (10) est une porte d'accès du véhicule.

4. Porte de voiture selon la revendication 1, en outre comprenant un joint d'étanchéité (22) s'étendant autour d'une périphérie de la porte de voiture (10).

5. Porte de voiture selon la revendication 1, dans laquelle l'élément de tension (30) est une corde.

6. Porte de voiture selon la revendication 1, dans laquelle l'élément de tension (30) est un câble.

7. Porte de voiture selon la revendication 1, dans lequel le mécanisme de réglage (32) est accessible à travers un trou (36) dans la porte (10).

8. Porte de voiture selon la revendication 1, dans lequel le profilé est un profilé courbé.

9. Porte de voiture selon la revendication 1, dans lequel l'élément de réglage (32) peut être tourné pour augmenter la tension de l'élément de tension (30).

10. Procédé de réglage du profilé de la porte de voiture (10) selon la revendication 1, le procédé comprenant l'augmentation de la tension de l'élément de tension (30) afin de régler le profilé de la porte de voiture (10).
